(19) Europäisches Patentamt
European Patent Office
Office européen des brevets

(11) **EP 3 694 262 A1**

(12) **EUROPEAN PATENT APPLICATION**

(43) Date of publication:
**12.08.2020 Bulletin 2020/33**

(51) Int Cl.:
*H04W 52/06* (2009.01)       *H04W 52/22* (2009.01)
*H04W 52/24* (2009.01)       *H04W 52/08* (2009.01)
*H04W 52/10* (2009.01)       *H04W 52/14* (2009.01)
*H04W 52/26* (2009.01)       *H04W 52/28* (2009.01)

(21) Application number: **19210829.8**

(22) Date of filing: **26.09.2007**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **03.10.2006 US 827965 P**
          **27.10.2006 US 863188 P**

(62) Document number(s) of the earlier application(s) in accordance with Art. 76 EPC:
**07838886.5 / 2 080 282**

(71) Applicant: **InterDigital Technology Corporation Wilmington, DE 19809-3727 (US)**

(72) Inventors:
• **Shin, Sung-Hyuk**
  **Northvale, NJ 07647 (US)**
• **Grieco, Donald M.**
  **Manhassett, NY 11030 (US)**
• **Olesen, Robert L.**
  **Huntington, NY 11743 (US)**

(74) Representative: **AWA Sweden AB**
  **P.O. Box 665**
  **831 27 Östersund (SE)**

Remarks:
•This application was filed on 22-11-2019 as a divisional application to the application mentioned under INID code 62.
•Claims filed after the date of receipt of the divisional application (Rule 68(4) EPC).

(54) **COMBINED OPEN LOOP/CLOSED LOPP (CQI-BASED) UPLINK TRANSMIT POWER CONTROL WITH INTERFERENCE MITIGATION FOR E-UTRA**

(57)    A combined open loop and closed loop (channel quality indicator (CQI)-based) transmit power control (TPC) scheme with interference mitigation for a long term evolution (LTE) wireless transmit/receive unit (WTRU) is disclosed. The transmit power of the WTRU is derived based on a target signal-to-interference noise ratio (SINR) and a pathloss value. The pathloss value pertains to the downlink signal from a serving evolved Node-B (eNodeB) and includes shadowing. An interference and noise value of the serving eNodeB is included in the transmit power derivation, along with an offset constant value to adjust for downlink (DL) reference signal power and actual transmit power. A weighting factor is also used based on the availability of CQI feedback.

FIG. 2

**Description**

FIELD OF INVENTION

The present invention is related to wireless communication systems.

BACKGROUND

For the evolved universal terrestrial radio access (E-UTRA) uplink (UL), there are several transmit power control (TPC) proposals that were submitted to third generation partnership project (3GPP) long term evolution (LTE) Work Group 1 (WG1). These proposals can be generally divided into (slow) open loop TPC and slow closed loop or channel quality information (CQI)-based TPC.

Open loop TPC is based on pathloss measurement and system parameters where the pathloss measurement is performed at a wireless transmit/receive unit (WTRU) and the system parameters are provided by an evolved Node-B (eNodeB).

Closed loop TPC is typically based on TPC feedback information, (such as a TPC command), that is periodically sent from the eNodeB where the feedback information is generally derived using signal-to-interference noise ratio (SINR) measured at the eNodeB.

Open loop TPC can compensate for long-term channel variations, (e.g. pathloss and shadowing), in an effective way, for instance, without the history of the transmit power. However, open loop TPC typically results in pathloss measurement errors and transmit power setting errors. On the other hand, slow closed loop or CQI-based TPC is less sensitive to errors in measurement and transmit power setting, because it is based on feedback signaled from the eNodeB. However, slow closed loop or CQI-based TPC degrades performance when there is no available feedback due to UL transmission pause, or pauses in the feedback transmission or channel variations are severely dynamic.

SUMMARY

For the E-UTRA UL, TPC is considered to compensate for at least path loss and shadowing and/or to mitigate interference. An enhanced UL TPC scheme that combines an open loop TPC scheme and a closed loop TPC with interference mitigation is disclosed. The closed loop TCP is based on CQI, (e.g., UL grant information or modulation and coding set (MCS) information). This enhanced UL TPC scheme can be used for both the UL data and control channels. Also, this proposed enhanced UL TPC scheme is flexible and adaptive to dynamic system/link parameters and channel conditions, in order to achieve the E-UTRA UL requirements.

Additionally, in order to avoid poor UL channel and CQI estimation where the channel and CQI estimation is based on the UL reference signal, it is proposed that the UL TPC for a data channel is performed at a slow rate such as 100 Hz, (i.e., one TPC update per one or two hybrid automatic repeat request (HARQ) cycle period(s)). For data-associated control signaling, the TPC update rate may be increased to 1000 Hz, assuming a maximum CQI reporting rate of once per 1 msec transmission timing interval (TTI).

BRIEF DESCRIPTION OF THE DRAWINGS

The foregoing summary, as well as the following detailed description, will be better understood when read with reference to the appended drawings, wherein:

Figure 1 shows a wireless communication system including a WTRU and an eNodeB; and
Figure 2 shows a flow diagram of a TPC procedure implemented by the system of Figure 1.

DETAILED DESCRIPTION

When referred to hereafter, the terminology "wireless transmit/receive unit (WTRU)" includes but is not limited to a user equipment (UE), a mobile station, a fixed or mobile subscriber unit, a pager, a cellular telephone, a personal digital assistant (PDA), a computer, or any other type of user device capable of operating in a wireless environment. When referred to hereafter, the terminology "evolved Node-B (eNodeB)" includes but is not limited to a base station, a Node-B, a cell, a site controller, an access point (AP), or any other type of interfacing device capable of operating in a wireless environment.

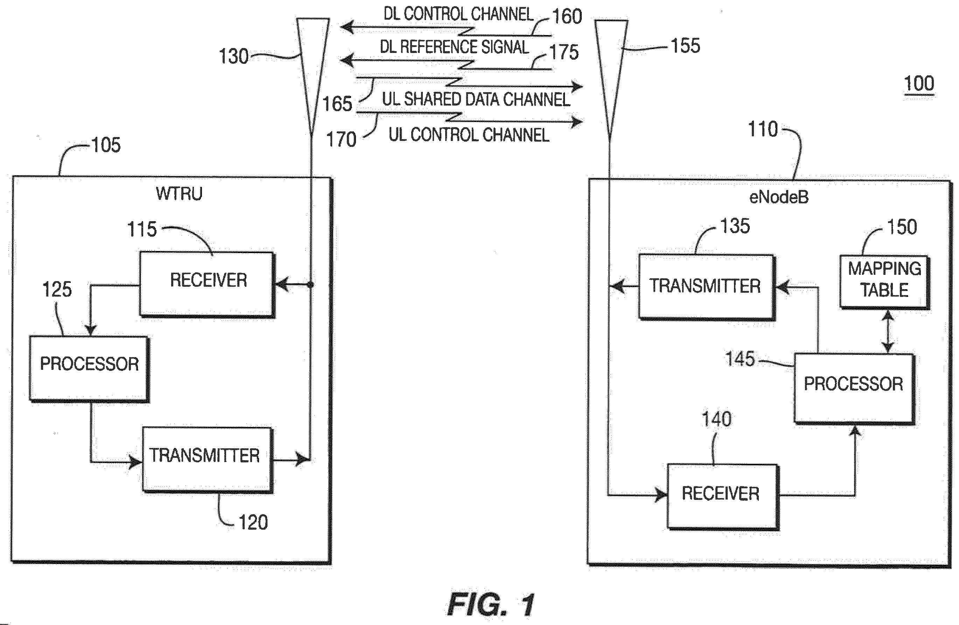

Figure 1 shows a wireless communication system 100 including at least one WTRU 105 and at least one serving eNodeB 110. The WTRU 105 includes a receiver 115, a transmitter 120, a processor 125 and at least one antenna 130. The serving eNode-B 110 includes a transmitter 135, a receiver 140, a processor 145, a mapping table 150 and at least one antenna 155. The WTRU 105 and the eNodeB 110 communicate via a downlink (DL) control channel 160, a UL shared data channel 165 and a UL control channel 170.

The processor 145 in the eNodeB 110 performs UL interference over thermal noise (*IoT*) measurements, based on signals received by the receiver 140, and compares the measured *IoT* measurements to a predefined threshold. The processor 145 also generates an interference load indicator that is broadcast by the transmitter 135 of the eNodeB 110 on either a regular basis or a trigger basis. The interference load indicator indicates whether or not the *IoT* measurements performed at the eNodeB 110 exceed the predefined threshold. When the receiver 115 in the WTRU 105 receives and decodes the interference load indicator, the processor 125 in the WTRU 105 is able to determine the status of the *IoT* at the eNodeB 110, which can be used to mitigate inter-cell interference in the eNodeB 110.

The WTRU 105 performs open loop TPC based on system parameters and pathloss measurements while it is located in a particular cell. The WTRU 105 relies on the interference load indicator to mitigate inter-cell interference in the eNodeB 110, which is located in the strongest cell neighboring the particular cell as compared to other neighboring cells. The strongest cell refers to a cell to which the WTRU 105 has the highest path gain, (i.e., least path loss). The WTRU 105 then corrects its open loop based calculated transmit power, which may be biased due to open loop errors, according to CQI received via the DL control channel 160 and target SINR, in order to compensate for the open loop errors.

It should be noted that the CQI refers to the UL grant information (or MCS) that the eNodeB 110 signals to the WTRU 105 via the DL control channel 160 for UL link adaptation. The CQI represents the WTRU specific UL channel quality which the serving eNodeB 110 feeds back to the WTRU 105 in the DL control channel 160. In E-UTRA, the CQI is provided in the form of UL grant information. The target SINR is a WTRU-specific parameter determined by the eNodeB 110 and signaled to the WTRU 105 via higher layer signaling.

The WTRU 105 transmit power, $P_{Tx}$, for the UL shared data channel 165 is determined in an initial transmission phase based on a DL reference signal 175 transmitted by the transmitter 135 of the eNodeB 110. The DL reference signal 175 has a known transmit power that the WTRU 105 uses for pathloss measurement. For intra-cell TPC, the WTRU 105 initial transmit power, $P_{Tx}$, is defined based on open loop TPC as follows:

$$P_{Tx} = \max\left(\min\left(SINR_T + PL + IN_0 + K, P_{\max}\right), \ P_{\min}\right). \qquad \text{Equation (1A)}$$

where $SINR_T$ is the target signal-to-interference noise ratio (SINR) in dB at the serving eNodeB 110, and $PL$ is the pathloss, (i.e., a set point parameter), in dB, including shadowing, from the serving eNodeB 110 to the WTRU 105. The WTRU 105 measures the pathloss based on the DL reference signal 175, whose transmit power is known at the WTRU 105 via DL signaling. The value $IN_0$ is the UL interference and noise power in dBm at the serving eNodeB 110. K is a power control margin used for the serving eNodeB 110, taking into account the fact that, in practice, the power of the DL reference signal 175 may be offset from the actual transmit power. $P_{max}$ and $P_{min}$ are the maximum and minimum transmit power levels in dBm, respectively, for transmissions made by the WTRU 105 over the UL shared data channel 165.

The target SINR for a WTRU 105, (or a sub-group of WTRUs), is assumed to be adjustable according to a certain metric at the serving eNodeB 110. An outer loop TPC scheme may be used for the target SINR adjustment. In general, the target SINR is determined based on the target link quality, (e.g., block error rate (BLER)), of the UL shared data channel 165. In addition, different multipath fading channel conditions typically require a different target SINR for a given target link quality, (e.g., BLER). Accordingly, the metric includes the target link quality (and possibly fading channel condition) to the WTRU 105.

In the case of UL multiple-input multiple output (MIMO), the target SINR also depends on a selected MIMO mode, taking into account the fact that different MIMO modes require different power or SINRs for a given link quality (e.g., BLER). In this case, the WTRU 105 may comprise a plurality of antennas 130.

Alternatively, the WTRU 105 transmit power, $P_{Tx}$, may be defined including inter-cell TPC as follows:

$$P_{Tx} = \max\left(\min\left(SINR_T + PL + IN_0 + K + \Delta\left(IoT_S\right), P_{\max}\right), \ P_{\min}\right); \quad \text{Equation (1B)}$$

where the value $\Delta(IoT_S)$ represents the UL load control step size, which is a function of the UL interference load indicator ($IoT_S$) of the strongest (S) neighboring cell, $IoT_S$.

$\Delta(IoT_S)$ takes an integer value as follows:

$$\Delta\left(IoT_S\right) = \begin{cases} \delta < 0, & \text{when } IoT_S = 1 \ (e.g.,\ down\ command) \\ 0, & \text{when } IoT_S = 0 \ (e.g.,\ no\ change); \end{cases} \qquad \text{Equation (2)}$$

where $\delta$ is a predefined system parameter, e.g., $\delta$ = -1 *or* - 2 *dB*. With the use of $\Delta(IoT_S)$, inter-cell interference in neighboring cells can be mitigated. Since WTRUs at cell center inject less interference into other cells than those at cell edge, a fraction of the load control step size is considered as follows:

$$\delta = \begin{cases} \delta, & \textit{for WTRUs at cell edge} \\ \dfrac{\delta}{x}, & \textit{for cell interior WTRUs where } x > 1; \end{cases} \qquad \text{Equation (3)}$$

where x is the fractional inter-cell load control factor.

The strongest neighboring cell is determined at the WTRU 105, based on pathloss measurements from the individual neighboring cell to the WTRU 105, where the strongest neighboring cell is the neighboring cell to which the WTRU 105 has the least pathloss among the cells neighboring the cell that the WTRU 105 is currently served by.

$\Delta(IoT_S)$ is introduced to mitigate inter-cell interference, (e.g., inter-cell TPC), especially to the strongest neighboring cell. For inter-cell TPC, eNodeB measures UL interference (on a regular basis or periodically) and then determines whether or not the measured interference level exceeds a predefined threshold. The resulting status on the UL interference is broadcast using $IoT_S$ (i.e., the load indicator) from the eNodeB 110 (on a regular basis or a trigger basis). For example, if the interference exceeds the threshold, then $IoT_S$ is set to 1, whereby the eNodeB 110 commands WTRUs in neighboring cells to reduce their transmit power by a certain amount, since the eNodeB 110 experiences excessive inter-cell interference in the UL. Otherwise, $IoT_S$ is set to 0, whereby the eNodeB 110 accepts the current UL interference level, so that WTRUs in neighboring cells do not require their transmit power to be reduced. The WTRU 105 decodes the load indicator received from the strongest neighboring cell and then follows the command ($IoT_S$). If $IoT_S$ is decoded as 1, then the transmit power of the WTRU 105 is reduced by $\Delta(IoT_S)$, that is, $\Delta(IoT_S) < 0$ dB. If $IoT_S$ is decoded as 0, then $\Delta(IoT_S) = 0$ dB.

It is assumed that each cell broadcasts a UL interference load bit periodically, (similar to the relative grant in high speed uplink packet access (HSUPA)), so that the WTRU 105 can decode the indicator bit from the selected strongest neighboring cell. The WTRU 105 may make a decision on whether the WTRU 105 is at cell edge or at cell interior, based on a pathloss ratio between its serving cell and the strongest neighboring cell. Alternatively, the fractional inter-cell load control factor x may be defined as follows:

$$x = \frac{\textit{pathloss from the strongest neighboring cell}}{\textit{pathloss from the serving cell}} > 1. \qquad \text{Equation (4)}$$

After an initial transmission phase during which the WTRU 105 starts implementing its TPC immediately after power up (similar to random access channel (RACH) processing) or after a session connection is established, the WTRU transmit power is calculated as follows:

$$P_{tx} = \max\left(\min\left(SINR_T + PL + IN_0 + K + \alpha \cdot f\left(CQI, SINR_T\right), P_{\max}\right), \ P_{\min}\right);$$

$$\text{Equation (5)}$$

where $f$ ($CQI$, $SINR_T$) is a closed loop correction factor based on the UL CQI, (e.g., UL grant information or MCS information), and the corresponding target SINR. A weighting factor $\alpha$ may be determined, where $0 \leq \alpha \leq 1$, according to channel conditions and CQI availability (or UL transmission pause). For example, in the case that there is no UL CQI (UL grant or MCS information) available from the eNodeB 110 due to a lack of a scheduled UL data transmission, the weighting factor $\alpha$ is set to zero. Otherwise, the weighting factor $\alpha$ is set to one. Although for simplicity, the weighting factor $\alpha$ is set to 0 or 1 here, an alternative embodiment includes an adaptive $\alpha$ value adapted to channel conditions and UL/DL channel configuration.

The correction factor, $f(CQI, SINR_T)$, is used to compensate for open loop TPC related errors, including the pathloss measurement error mainly due to non-perfect reciprocity in UL and DL in frequency division duplex (FDD), and the impairment of the transmitter 120 of the WTRU 105 due to non-linear power amplification. In addition to the pathloss, which is a set point parameter, the eNodeB 110 may facilitate the correction factor to adjust the TPC relevant system parameters such as SINR, $IN_0$ and K, which are also set point parameters. For example, when it is necessary for the eNodeB 110 to adjust the target SINR for a given WTRU 105 and then let the WTRU 105 know about the adjustment, the eNodeB 110 may adjust CQI (UL grant) for the WTRU 105 accordingly, rather than directly signaling the target SINR to the WTRU 105. The correction factor is calculated by the WTRU 105 according to the UL CQI (UL grant or MCS information) feedback from the serving eNodeB 110, taking into account the fact that the UL CQI represents the SINR received at the eNodeB 110. For example,

$$f(CQI, SINR_T) = SINR_T - E\{SINR_{est}(CQI)\} \text{ (dB);} \quad \text{Equation (6)}$$

where $SINR_{est}(CQI)$ represents the eNodeB received SINR estimate which the WTRU 105 derives from the UL CQI feedback. $E\{SINR_{est}(CQI)\}$ denotes the estimated SINR average over time such that:

$$E\{SINR_{est}(CQI^k)\} = \rho \cdot E\{SINR_{est}(CQI^{k-1})\} + (1 - \rho) \cdot E\{SINR_{est}(CQI^k)\}; \quad \text{Equation (7)}$$

where $CQI^k$ represents the k-th received CQI and $\rho$ is the averaging filter coefficient, $0 \le \rho \le 1$.

The correction factor, given above by the difference between the target SINR and the estimated SINR (derived from the reported CQIs), typically represents the open loop TPC related errors which need to be compensated.

eNodeB Signaling For The Proposed TPC Scheme

A target SINR level, $SINR_T$, which is a WTRU (or a sub-group of WTRUs)-specific parameter, may be signaled by the eNodeB 110 to the WTRU 105 as a function of the distance (e.g., pathloss) from the eNodeB 110 to the WTRU 105 and/or the given quality requirement(s), such as BLER. Typically, the eNodeB 110 uses the mapping table 150 to map a target quality (e.g., BLER) to a target SINR value. How such a mapping table is generated is the eNodeB's (or carrier operator's) proprietary scheme. The target SINR may be adjusted through an outer loop mechanism. The signaling of the target SINR is done via in band L1/2 control signaling upon its adjustment.

A power control margin, $K$, which is an eNodeB-specific parameter used primarily for the DL reference signal, may be signaled by the eNodeB 110 to the WTRU 105. For instance, the DL reference signal 175 is used for the pathloss measurement of the WTRU 105, since the DL reference signal 175 is transmitted with a constant transmit power level which is known at the WTRU via higher layer signaling. However, the actual transmit power of the DL reference signal 175 may be different than the signaled power value due to an eNodeB's proprietary scheme. In this case, the power offset is between the actually used transmit power and the transmit power signaled via a broadcast channel (BCH) on a semi-static basis. $K$ is likely to be semi-static and signaled via a broadcast channel (BCH). The WTRU 105 uses this information for its UL/DL pathloss calculation. It should be noted that even though the power control margin, $K$, is assumed to be separately signaled along with the other parameters, it may be embedded in the target SINR, $SINR_T$, such that:

$$SINR_T \text{ (after embedding)} = SINR_T + K \text{ (dB).} \quad \text{Equation (8)}$$

In this case, explicit signaling of $K$ to the WTRU 105 is not required.

A total UL interference and noise level, $IN_0$, which is averaged across all of the sub-carriers (or radio bearers (RBs)) in use, or a subset of the sub-carriers, may be signaled by the eNodeB 110 to the WTRU 105. This is measured/derived by the eNodeB 110 (and possibly signaled via the BCH). The update rate for this signaling is generally relatively slow. The eNodeB 110 measures/estimates $IN_0$ on a regular basis using an eNodeB proprietary scheme, such as a noise estimation technique.

The maximum and minimum UL transmit power level, $P_{max}$ and $P_{min}$, may be signaled by the eNodeB 110 to the WTRU 105. These may be WTRU capability dependent parameters or may be expressly signaled by the eNodeB 110.

A UL CQI, (e.g., UL grant information or MCS information), which is signaled originally for the purpose of UL link adaptation, (e.g., adaptive modulation and coding (AMC)), (with a maximum signaling rate of once per TTI, e.g. 1000 Hz), may be signaled by the eNodeB 110 to the WTRU 105.

The UL CQI, (e.g., UL grant information), is WTRU-specific feedback information that the eNodeB 110 signals to the WTRU 105. Although UL CQI was originally used for the purpose of UL link adaptation, it is also used for the closed loop component of the proposed combined open loop and closed loop TPC. Generally, the CQI (UL grant) is derived based on the UL channel condition, (e.g., SINR measurement at the eNodeB 110) and a SINR-to-CQI mapping rule, meaning the UL CQI represents the SINR measured at the eNodeB 110. Accordingly, once the WTRU 105 receives a CQI and is given the mapping rule which is used for the SINR-to-CQI mapping at the eNodeB 110, then the WTRU 105 can interpret the received CQI to a SINR estimate. The estimated SINR is used for calculating the correction term in accordance with Equation (6).

A CQI mapping rule, (or bias between CQI and measured SINR), which the eNodeB 110 uses for CQI feedback generation, may be signaled by the eNodeB 110 to the WTRU 105. This rule or parameter may be combined into the target SINR. In this case, explicit signaling of the rule (or parameter) is not required.

The above TPC scheme is advantageous because it does not require additional feedback TPC commands other than the above listed system parameters, including the target SINR, cell interference/noise level, reference signal transmit power, and constant value, which can be broadcast (or directly signaled) to WTRUs on a slow rate basis. Furthermore, the above TPC scheme is designed to be flexible and adaptive to dynamic system/link parameters, (target SINR and inter-cell interference loading condition), and channel conditions, (path loss and shadowing), in order to achieve the E-UTRA requirements. Additionally, the above TPC scheme is compatible with other link adaptation schemes such as AMC, HARQ, and adaptive MIMO.

Even though the scheme proposed herein uses UL CQI, (e.g., UL grant information), for the closed loop component, (e.g., the correction factor), of the proposed combined open loop and closed loop TPC for E-UTRA UL; alternatively, the eNodeB 110 may explicitly signal to the WTRU 105 a correction command embedded in UL grant information. In this case, the WTRU 105 may use the explicitly signaled correction command for the closed loop correction factor (possibly combined with UL CQI). In addition, the proposed TPC may be used for inter-cell interference mitigation, if the serving eNodeB 110 coordinates inter-cell interference levels with other cells and incorporates them through adjusting the target SIR or possibly $P_{max}$ accordingly.

For accurate UL channel estimation (for UL data/control signaling demodulation) and CQI estimation (for UL scheduling and link adaptation), it is desirable to adjust the UL reference signal transmit power at a relatively fast rate to cope with poor channel and/or system conditions as quickly as possible. Even though the above proposed UL TPC for data channels updates the WTRU transmit power at a slow rate, (taking into account UL AMC per 1 msec-TTI), an update rate of as fast as 100 Hz may be implemented, (e.g., one update per one or two HARQ cycle period(s)), in order to avoid poor UL channel and CQI estimation. The update rate is controlled by the WTRU 105, preferably such that the WTRU 105 can update every time a CQI is received.

For the UL control signaling, the WTRU 105 uses the above combined TPC scheme with the following deviations. When UL CQI is available with a maximum CQI reporting rate of once per 1 msec TTI, a fast TPC update rate is used (e.g., 1000 Hz). In this case, the correction factor, $f(CQI, SINR_T)$, in Equation (5) can be expressed as follows:

$$f(CQI, SINR_T) = SINR_T - SINR_{est}(CQI) \text{ (dB)}; \qquad \text{Equation (9)}$$

where *CQI* is the most recent UL CQI. In addition, the weighting factor is set equal to one ($\alpha = 1$). This results in a combined open loop and fast CQI-based TPC. When no UL CQI is available, the CQI-based TPC component is disabled, (i.e., $\alpha = 0$). This results in open loop TPC only.

For the UL shared data channel 165, the WTRU 105 determines its transmit power based on a combined open loop and CQI based TPC at a slow update rate, such as 100 Hz. In the initial transmission, and/or when there is no UL CQI available from the eNodeB 110, such as during a transmission pause, the CQI-based transmit power control component is disabled, and only open loop TPC is used.

For the UL shared data channel 165, the WTRU 105 determines its transmit power based on a combined open loop and CQI-based TPC at a fast update rate, such as up to 1000 Hz. When there is no UL CQI available from the eNodeB 110, such as during a transmission pause, the CQI-based transmit power control component is disabled and only open loop TPC is used.

The eNodeB 110 broadcasts the TPC associated system parameters including its reference signal transmit power level, interference level, and power margin. In addition, the eNodeB 110 signals to the WTRU 105 the TPC associated WTRU-specific parameters, including target SINR, the WTRU maximum power level, and the minimum power level, where the signaling is done via in-band layer 1/2 control signaling. An outer loop may be used to adjust the target SINR.

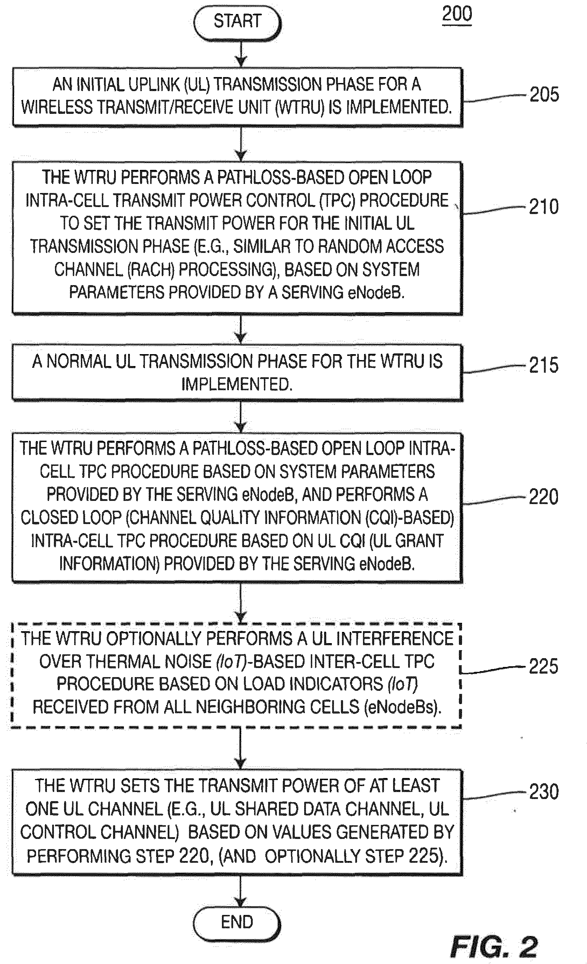

Figure 2 shows a flow diagram of a TPC procedure 200 that may be implemented by the system 100 of Figure 1. In step 205, an initial UL transmission phase is implemented. The WTRU 105 performs a pathloss-based open loop intra-cell TPC procedure to set the transmit power for the initial UL transmission phase (e.g., similar to a RACH procedure), based on system parameters provided by the serving eNodeB 110, such as SINR, $IN_0, K$ and the transmit power of the DL reference signal 175 (step 210). In step 215, a normal UL transmission phase is implemented. The WTRU 105 performs a pathloss-based open loop intra-cell TPC procedure based on system parameters provided by the serving eNodeB 110, and performs a closed loop (CQI-based) intra-cell TPC procedure based on UL CQI (UL grant information) provided by the serving eNodeB 110 (step 220). Optionally, the WTRU performs an *IoT*-based inter-cell TPC procedure based on load indicators (*IoT*) received from all neighboring cells (eNodeBs) (step 225). In step 230, the WTRU 105 sets the transmit power of at least one UL channel, (e.g., the UL shared data channel 165, the UL control channel 170), based on values generated by performing step 220, (and optionally step 225).

Itemized list of examples /embodiments

EX 1. A method of performing transmit power control (TPC) of a wireless transmit/receive unit (WTRU), the method comprising:

(a) the WTRU performing an open loop intra-cell TPC procedure by determining a set point parameter; and

(b) the WTRU performing a closed loop intra-cell TPC procedure to adjust the set point parameter determined by the open loop intra-cell TPC procedure by using a closed loop correction factor.

EX 2. The method of EX 1 wherein the set point parameter is uplink (UL) pathloss from the WTRU to a serving evolved Node-B (eNodeB) residing in a serving cell, and the closed loop correction factor is used to compensate for open loop TPC related errors associated with the set point parameter.

EX 3. The method as in any one of EX 1 and 2 wherein the closed loop correction factor is a function of uplink (UL) channel quality information (CQI) and a target signal-to-interference noise ratio (SINR).

EX 4. The method as in any one of EX 1 and 3 wherein the set point parameter is a target signal-to-interference noise ratio (SINR) at a serving evolved Node-B (eNodeB) residing in a serving cell, and the closed loop correction factor is used to compensate for open loop TPC related errors associated with the set point parameter.

EX 5. The method as in any one of EX 1 and 3 wherein the set point parameter is the UL interference and noise power ($IN_0$) at a serving evolved Node-B (eNodeB) residing in a serving cell, and the closed loop correction factor is used to compensate for open loop TPC related errors associated with the set point parameter.

EX 6. The method as in any one of EX 1 and 3 wherein the set point parameter is a power control margin ($K$) at a serving evolved Node-B (eNodeB) residing in a serving cell, and the closed loop correction factor is used to compensate for open loop TPC related errors associated with the set point parameter.

EX 7. A wireless transmit/receive unit (WTRU) for performing transmit power control (TPC), the WTRU comprising:

(a) a receiver;

(b) a transmitter; and

(c) a processor electrically coupled to the receiver and the transmitter, the processor being configured to perform an open loop intra-cell TPC procedure by determining a set point parameter, and perform a closed loop intra-cell TPC procedure to adjust the set point parameter determined by the open loop intra-cell TPC procedure by using a closed loop correction factor.

EX 8. The WTRU of EX 7 wherein the set point parameter is uplink (UL) pathloss, *PL,* from the WTRU to a serving evolved Node-B (eNodeB) residing in a serving cell, and the closed loop correction factor is used to compensate for open loop TPC related errors associated with the set point parameter.

EX 9. The WTRU as in any one of EX 7 and 8 wherein the closed loop correction factor is a function of UL channel quality information and a target signal-to-interference noise ratio (SINR).

EX 10. The WTRU as in any one of EX 7 and 9 wherein the set point parameter is a target signal-to-interference noise ratio (SINR) at a serving evolved Node-B (eNodeB) residing in a serving cell, and the closed loop correction factor is used to compensate for open loop TPC related errors associated with the set point parameter.

EX 11. The WTRU as in any one of EX 7 and 9 wherein the set point parameter is the UL interference and noise power ($IN_0$) at a serving evolved Node-B (eNodeB) residing in a serving cell, and the closed loop correction factor is used to compensate for open loop TPC related errors associated with the set point parameter.

EX 12. The WTRU as in any one of EX 7 and 9 wherein the set point parameter is a power control margin ($K$) at a serving evolved Node-B (eNodeB) residing in a serving cell, and the closed loop correction factor is used to compensate for open loop TPC related errors associated with the set point parameter.

EX 13. A method of performing transmit power control (TPC) of a wireless transmit/receive unit (WTRU), the method comprising:

(a) the WTRU performing an open loop intra-cell TPC procedure based on a periodic uplink (UL) pathloss measurement from the WTRU to a serving evolved Node-B (eNodeB) residing in a serving cell;

(b) the WTRU performing a closed loop intra-cell TPC procedure based on UL channel quality information (CQI) provided to the WTRU by the serving eNodeB; and

(c) the WTRU setting a transmit power level of at least one UL channel based on a combination of parameter values generated by performing the open loop intra-cell TPC procedure and the closed loop intra-cell TPC procedure.

EX 14. The method of EX 13 further comprising:
(d) the WTRU performing a UL interference over thermal noise (*IoT*)-based inter-cell TPC procedure, wherein step (c) further comprises the WTRU setting the transmit power of the at least one UL channel based on a combination of parameter values generated by performing the open loop intra-cell TPC procedure, the closed loop intra-cell TPC procedure and the *IoT*-based inter-cell TPC procedure.
EX 15. The method as in any one of EX 13 and 14 wherein the at least one UL channel includes a UL shared data channel.
EX 16. The method as in any one of EX 13 and 14 wherein the at least one UL channel includes a UL control channel.
EX 17. The method of EX 14 further comprising:
(e) implementing an initial UL transmission phase for the WTRU.
EX 18. The method of EX 17 wherein step (a) further comprises:

(a1) the serving eNodeB signaling a plurality of open loop parameters to the WTRU, wherein the open loop parameters are signaled either individually or as a single composite parameter; and
(a2) determining the transmit power, $P_{Tx}$, of the WTRU based on a downlink (DL) reference signal and the open loop parameters transmitted by the serving eNodeB as follows:

$$P_{Tx} = \max\left(\min\left(SINR_T + PL + IN_0 + K, P_{max}\right),\ P_{min}\right),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, and $P_{max}$ and $P_{min}$ are the maximum and minimum transmit power levels in dBm, respectively, for transmissions made by the WTRU over the at least one UL channel.

EX 19. The method of EX 17 wherein step (d) further comprises:
(a1) determining the transmit power, $P_{Tx}$, of the WTRU based on a downlink (DL) reference signal transmitted by the serving eNodeB as follows:

$$P_{Tx} = \max\left(\min\left(SINR_T + PL + IN_0 + K + \Delta(IoT_S), P_{max}\right),\ P_{min}\right),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, K is a power control margin used for the serving eNodeB, $P_{max}$ and $P_{min}$ are the maximum and minimum transmit power levels in dBm, respectively, for transmissions made by the WTRU over the at least one UL channel, and $\Delta(IoT_S)$ represents a UL load control step size that is a function of a UL interference load indicator of a strongest neighboring cell, $IoT_S$.
EX 20. The method of EX17 wherein step (a) further comprises:
(a1) the WTRU performing a pathloss-based open loop intra-cell TPC procedure to set the transmit power for the initial UL transmission phase.
EX 21. The method as in any one of EX 13-20 wherein the UL CQI is UL grant information.
EX 22. The method of EX 14 wherein step (d) further comprises:

(d1) the eNodeB measuring a UL interference level;

(d2) the eNodeB determining whether or not the measured UL interference level exceeds a predefined threshold; and

(d3) the eNodeB broadcasting an interference load indicator on a regular basis or a trigger basis, wherein the interference load indicator indicates whether or not the measured UL interference level exceeds the predefined threshold.

EX 23. The method of EX 22 wherein the measured UL interference level is a UL interference over thermal noise (*IoT*) measurement.

EX 24. The method of EX 17 wherein steps (a) and (b) are executed after step (e), and step (b) further comprises: (b1) calculating the WTRU transmit power as follows:

$$P_{tx} = \max\left(\min\left(SINR_T + PL + IN_0 + K + \alpha \cdot f(CQI, SINR_T), P_{max}\right), \ P_{min}\right),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, $f(CQI, SINR_T)$ is a closed loop correction factor based on the UL CQI and the corresponding target SINR, $\alpha$ is a weighting factor, and $P_{max}$ and $P_{min}$ are the maximum and minimum transmit power levels in dBm, respectively, for transmissions made by the WTRU over the at least one UL channel.

EX 25. The method of EX 24 wherein $0 \le \alpha \le 1$.

EX 26. The method as in any one of EX 24 and 25 wherein the closed loop correction factor, $f(CQI, SINR_T)$, is used to compensate for open loop TPC related errors.

EX 27. The method as in any one of EX 24-26 wherein the closed loop correction factor $f(CQI, SINR_T)$ is calculated by the WTRU according to UL CQI feedback from the serving eNodeB, taking into account the fact that the UL CQI represents the SINR received at the eNodeB, such that $f(CQI, SINT_T) = SINR_T - E\{SINR_{est}(CQI)\}$ (dB), where $SINR_{est}(CQI)$ represents the eNodeB received SINR estimate which the WTRU derives from the UL CQI feedback.

EX 28. The method of EX 27 wherein $E\{SINR_{est}(CQI)\}$ denotes the estimated SINR average over time such that:

$$E\left\{SINR_{est}(CQI^k)\right\} = \rho \cdot E\left\{SINR_{est}(CQI^{k-1})\right\} + (1 - \rho) \cdot E\left\{SINR_{est}(CQI^k)\right\},$$

where $CQI^k$ represents the k-th received CQI and $\rho$ is an averaging filter coefficient, where $0 \le \rho \le 1$.

EX 29. A wireless transmit/receive unit (WTRU) for performing transmit power control (TPC), the WTRU comprising:

(a) a receiver;

(b) a processor electrically coupled to the receiver, the processor being configured to perform an open loop intra-cell TPC procedure based on a periodic uplink (UL) pathloss measurement from the WTRU to a serving evolved Node-B (eNodeB) residing in a serving cell, and to perform a closed loop intra-cell TPC procedure based on UL channel quality information (CQI) received by the receiver from the serving eNodeB; and

(c) a transmitter electrically coupled to the processor, the transmitter being configured to generate at least one UL channel having a transmit power level based on a combination of parameter values generated by performing the open loop intra-cell TPC procedure and the closed loop intra-cell TPC procedure.

EX 30. The WTRU of EX 29 wherein the processor is configured to perform a UL interference over thermal noise (*IoT*)-based inter-cell TPC procedure, and the transmitter is configured to generate at least one UL channel having a transmit power level based on a combination of parameter values generated by performing the open loop intra-cell TPC procedure, the closed loop intra-cell TPC procedure and the *IoT*-based inter-cell TPC procedure.

EX 31. The WTRU as in any one of EX 29 and 30 wherein the at least one UL channel includes a UL shared data channel.

EX 32. The WTRU as in any one of EX 29 and 30 wherein the at least one UL channel includes a UL control channel.

EX 33. The WTRU as in any one of EX 29-32 wherein the receiver is configured to receive a plurality of open loop parameters signaled by the serving eNodeB signaling to the WTRU, wherein the open loop parameters are signaled either individually or as a single composite parameter, and the processor is configured to determine the transmit power, $P_{Tx}$, of the WTRU based on a downlink (DL) reference signal and the open loop parameters transmitted by the serving eNodeB as follows:

$$P_{Tx} = \max\left(\min\left(SINR_T + PL + IN_0 + K, P_{max}\right), \ P_{min}\right),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, and $P_{max}$ and $P_{min}$ are the maximum and minimum transmit power levels in dBm, respectively, for transmissions made by the WTRU over the at least one UL channel.

EX 34. The WTRU of EX 30 wherein the processor is configured to determine the transmit power, $P_{Tx}$, of the WTRU based on a downlink (DL) reference signal transmitted by the serving eNodeB as follows:

$$P_{Tx} = \max\left(\min\left(SINR_T + PL + IN_0 + K + \Delta(IoT_S), P_{max}\right), \ P_{min}\right),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, $P_{max}$ and $P_{min}$ are the maximum and minimum transmit power levels in dBm, respectively, for transmissions made by the WTRU over the at least one UL channel, and $\Delta(IoT_S)$ represents a UL load control step size that is a function of a UL interference load indicator of a strongest neighboring cell, $IoT_S$.

EX 35. The WTRU as in any one of EX 29-34 wherein the processor is configured to perform a pathloss-based open loop intra-cell TPC procedure to set the transmit power for an initial UL transmission phase.

EX 36. The WTRU as in any one of EX 29-35 wherein the UL CQI is UL grant information.

EX 37. The WTRU as in any one of EX 29-36 wherein the processor is configured to calculate the WTRU transmit power as follows:

$$P_{tx} = \max\left(\min\left(SINR_T + PL + IN_0 + K + \alpha \cdot f(CQI, SINR_T), P_{max}\right), \ P_{min}\right),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, $f(CQI, SINR_T)$ is a closed loop correction factor based on the UL CQI and the corresponding target SINR, $\alpha$ is a weighting factor, and $P_{max}$ and $P_{min}$ are the maximum and minimum transmit power levels in dBm, respectively, for transmissions made by the WTRU over the at least one UL channel.

EX 38. The WTRU of EX 37 wherein $0 \le \alpha \le 1$.

EX 39. The WTRU as in any one of EX 37 and 38 wherein the closed loop correction factor, $f(CQI, SINR_T)$, is used to compensate for open loop TPC related errors.

EX 40. The WTRU as in any one of EX 37-39 wherein the closed loop correction factor $f(CQI, SINR_T)$ is calculated by the WTRU according to UL CQI feedback from the serving eNodeB, taking into account the fact that the UL CQI represents the SINR received at the eNodeB, such that $f(CQI, SINT_T) = SINR_T - E\{SINR_{est}(CQI)\}$ (dB), where $SINR_{est}(CQI)$ represents the eNodeB received SINR estimate which the WTRU derives from the UL CQI feedback.

EX 41. The WTRU of EX 40 wherein $E\{SINR_{est}(CQI)\}$ denotes the estimated SINR average over time such that:

$$E\left\{SINR_{est}(CQI^k)\right\} = \rho \cdot E\left\{SINR_{est}(CQI^{k-1})\right\} + (1 - \rho) \cdot E\left\{SINR_{est}(CQI^k)\right\},$$

where $CQI^K$ represents the k-th received CQI and $\rho$ is an averaging filter coefficient, where $0 \le \rho \le 1$.

EX 42. An evolved Node-B (eNodeB) for performing transmit power control (TPC), the eNodeB comprising:

(a) a processor configured to measure an uplink (UL) interference level, and determine whether or not the measured UL interference level exceeds a predefined threshold; and

(b) a transmitter electrically coupled to the processor, the transmitter being configured to broadcast an interference load indicator on a regular basis or a trigger basis, wherein the interference load indicator indicates whether or not the measured UL interference level exceeds the predefined threshold.

EX 43. The eNodeB of EX 42 wherein the measured UL interference level is a UL interference over thermal noise ($IoT$) measurement.

EX 44. The eNodeB of EX 42 wherein the transmitter is configured to signal a target signal-to-interference noise ratio (SINR) level, $SINR_T$, to a wireless transmit/receive unit (WTRU) as a function of at least one of the distance from the eNodeB to the WTRU and a given quality requirement.

EX 45. The eNodeB of EX 44 wherein the given quality requirement is block error rate (BLER).

EX 46. The eNodeB as in any one of EX 42-45 further comprising:

(c) a mapping table electrically coupled to the processor, wherein the processor is configured to use the mapping table to map a target quality value to a target SINR value.

EX 47. The eNodeB of EX 46 wherein the target quality value is block error rate (BLER).

EX 48. The eNodeB as in any one of EX 42-47 wherein the transmitter is configured to generate a downlink (DL) reference signal.

EX 49. The eNodeB as in any one of EX 42-48 wherein the transmitter is configured to signal a power control margin, $K$.

EX 50. The eNodeB of EX 49 wherein the power control margin, $K$, is embedded in the target SINR, $SINR_T$, such that $SINR_T$ (after embedding) = $SINR_T + K$ in $dB$.

EX 51. The eNodeB as in any one of EX 42-50 wherein the processor is configured to measure or estimate a total UL interference and noise level, $IN_0$, which is averaged by the processor across all of the sub-carriers in use, or a subset of the sub-carriers, and the transmitter is configured to signal the $IN_0$.

EX 52. The eNodeB as in any one of EX 42-51 wherein the transmitter is configured signal the maximum and minimum UL transmit power level, $P_{max}$ and $P_{min}$.

EX53. The eNodeB as in any one of EX 42-52 wherein the transmitter is configured to signal UL channel quality information (CQI).

EX 54. The eNodeB of EX 53 wherein the UL CQI includes a UL grant information or modulation and coding set (MCS) information, which is signaled originally for the purpose of UL link adaptation.

EX55. The eNodeB as in any one of EX 42-54 wherein the transmitter is configured to signal a channel quality information (CQI) mapping rule used for CQI feedback generation.

Although the features and elements are described in the embodiments in particular combinations, each feature or element can be used alone without the other features and elements of the preferred embodiments or in various combinations with or without other features and elements of the invention. The methods or flow charts provided herein may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

Further itemized examples/embodiments:

EXE 1. A method of performing transmit power control (TPC) of a wireless transmit/receive unit (WTRU), the method comprising:

(a) the WTRU performing an open loop intra-cell TPC procedure based on a periodic uplink (UL) pathloss measurement from the WTRU to a serving evolved Node-B (eNodeB) residing in a serving cell;

(b) the WTRU performing a closed loop intra-cell TPC procedure based on UL channel quality information (CQI) provided to the WTRU by the serving eNodeB; and

(c) the WTRU setting a transmit power level of at least one UL channel based on a combination of parameter values generated by performing the open loop intra-cell TPC procedure and the closed loop intra-cell TPC procedure.

EXE 2. The method of EXE 1 further comprising:

(d) the WTRU performing a UL interference over thermal noise (*IoT*)-based inter-cell TPC procedure, wherein step (c) further comprises the WTRU setting the transmit power of the at least one UL channel based on a combination of parameter values generated by performing the open loop intra-cell TPC procedure, the closed loop intra-cell TPC procedure and the *IoT*-based inter-cell TPC procedure.

EXE 3. The method of EXE 1 wherein the at least one UL channel includes a UL shared data channel.

EXE 4. The method of EXE 1 wherein the at least one UL channel includes a UL control channel.

EXE 5. The method of EXE 2 further comprising:
(e) implementing an initial UL transmission phase for the WTRU.

EXE 6. The method of EXE 5 wherein step (a) further comprises:

> (a1) the serving eNodeB signaling a plurality of open loop parameters to the WTRU, wherein the open loop parameters are signaled either individually or as a single composite parameter; and
> (a2) determining the transmit power, $P_{Tx}$, of the WTRU based on a downlink (DL) reference signal and the open loop parameters transmitted by the serving eNodeB as follows:

$$P_{Tx} = \max\left(\min\left(SINR_T + PL + IN_0 + K, P_{max}\right), \ P_{min}\right),$$

> where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, and $P_{max}$ and $P_{min}$ are the maximum and minimum transmit power levels in dBm, respectively, for transmissions made by the WTRU over the at least one UL channel.

EXE 7. The method of EXE 5 wherein step (d) further comprises:
(d1) determining the transmit power, $P_{Tx}$, of the WTRU based on a downlink (DL) reference signal transmitted by the serving eNodeB as follows:

$$P_{Tx} = \max\left(\min\left(SINR_T + PL + IN_0 + K + \Delta(IoT_S), P_{max}\right), \ P_{min}\right),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, $P_{max}$ and $P_{min}$ are the maximum and minimum transmit power levels in dBm, respectively, for transmissions made by the WTRU over the at least one UL channel, and $\Delta(IoT_S)$ represents a UL load control step size that is a function of a UL interference load indicator of a strongest neighboring cell, $IoT_S$.

EXE8. The method of EXE 5 wherein step (a) further comprises:
(a1) the WTRU performing a pathloss-based open loop intra-cell TPC procedure to set the transmit power for the initial UL transmission phase.

EXE 9. The method of EXE 1 wherein the UL CQI is UL grant information.

EXE 10. The method of EXE 2 wherein step (d) further comprises:

> (d1) the eNodeB measuring a UL interference level;
> (d2) the eNodeB determining whether or not the measured UL interference level exceeds a predefined threshold; and
> (d3) the eNodeB broadcasting an interference load indicator on a regular basis or a trigger basis, wherein the interference load indicator indicates whether or not the measured UL interference level exceeds the predefined threshold.

EXE 11. The method of EXE 10 wherein the measured UL interference level is a UL interference over thermal noise (*IoT*) measurement.

EXE 12. The method of EXE 5 wherein steps (a) and (b) are executed after step (e), and step (b) further comprises: (b1) calculating the WTRU transmit power as follows:

$$P_{tx} = \max\left(\min\left(SINR_T + PL + IN_0 + K + \alpha \cdot f\left(CQI, SINR_T\right), P_{\max}\right), \ P_{\min}\right),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, $f(CQI, SINR_T)$ is a closed loop correction factor based on the UL CQI and the corresponding target SINR, $\alpha$ is a weighting factor, and $P_{max}$ and $P_{min}$ are the maximum and minimum transmit power levels in dBm, respectively, for transmissions made by the WTRU over the at least one UL channel.

EXE13. The method of EXE 12 wherein $0 \leq \alpha \leq 1$.

EXE 14. The method of EXE 12 wherein the closed loop correction factor, $f\ (CQI, SINRT),$ is used to compensate for open loop TPC related errors.

EXE 15. The method of EXE 12 wherein the closed loop correction factor $f\ (CQI, SINR_T)$ is calculated by the WTRU according to UL CQI feedback from the serving eNodeB, taking into account the fact that the UL CQI represents the SINR received at the eNodeB, such that $f(CQI, SINT_T) = SINR_T - E\{SINR_{est}(CQI)\}$ (dB), where $SINR_{est}\ (CQI)$ represents the eNodeB received SINR estimate which the WTRU derives from the UL CQI feedback.

EXE 16. The method of EXE15 wherein $E\{SINR_{est}(CQI)\}$ denotes the estimated SINR average over time such that:

$$E\left\{SINR_{est}\left(CQI^k\right)\right\} = \rho \cdot E\left\{SINR_{est}\left(CQI^{k-1}\right)\right\} + \left(1 - \rho\right) \cdot E\left\{SINR_{est}\left(CQI^k\right)\right\},$$

where $CQI^k$ represents the k-th received CQI and $\rho$ is an averaging filter coefficient, where $0 \leq \rho \leq 1$.

EXE 17. A wireless transmit/receive unit (WTRU) for performing transmit power control (TPC), the WTRU comprising:

   (a) a receiver;

   (b) a processor electrically coupled to the receiver, the processor being configured to perform an open loop intra-cell TPC procedure based on a periodic uplink (UL) pathloss measurement from the WTRU to a serving evolved Node-B (eNodeB) residing in a serving cell, and to perform a closed loop intra-cell TPC procedure based on UL channel quality information (CQI) received by the receiver from the serving eNodeB; and

   (c) a transmitter electrically coupled to the processor, the transmitter being configured to generate at least one UL channel having a transmit power level based on a combination of parameter values generated by performing the open loop intra-cell TPC procedure and the closed loop intra-cell TPC procedure.

EXE 18. The WTRU of EXE 17 wherein the processor is configured to perform a UL interference over thermal noise (*IoT*)-based inter-cell TPC procedure, and the transmitter is configured to generate at least one UL channel having a transmit power level based on a combination of parameter values generated by performing the open loop intra-cell TPC procedure, the closed loop intra-cell TPC procedure and the *IoT*-based inter-cell TPC procedure.

EXE 19. The WTRU of EXE 17 wherein the at least one UL channel includes a UL shared data channel.

EXE 20. The WTRU of EXE 17 wherein the at least one UL channel includes a UL control channel.

EXE 21. The WTRU of EXE 17 wherein the receiver is configured to receive a plurality of open loop parameters signaled by the serving eNodeB signaling to the WTRU, wherein the open loop parameters are signaled either individually or as a single composite parameter, and the processor is configured to determine the transmit power,

$P_{Tx}$, of the WTRU based on a downlink (DL) reference signal and the open loop parameters transmitted by the serving eNodeB as follows:

$$P_{Tx} = \max\big(\min\big(SINR_T + PL + IN_0 + K, P_{\max}\big),\ P_{\min}\big),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, and $P_{max}$ and $P_{min}$ are the maximum and minimum transmit power levels in dBm, respectively, for transmissions made by the WTRU over the at least one UL channel.

EXE 22. The WTRU of EXE 18 wherein the processor is configured to determine the transmit power, $P_{Tx}$, of the WTRU based on a downlink (DL) reference signal transmitted by the serving eNodeB as follows:

$$P_{Tx} = \max\big(\min\big(SINR_T + PL + IN_0 + K + \Delta\big(IoT_S\big), P_{\max}\big),\ P_{\min}\big),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, $P_{max}$ and $P_{min}$ are the maximum and minimum transmit power levels in dBm, respectively, for transmissions made by the WTRU over the at least one UL channel, and $\Delta(IoT_S)$ represents a UL load control step size that is a function of a UL interference load indicator of a strongest neighboring cell, $IoT_S$.

EXE 23. The WTRU of EXE 17 wherein the processor is configured to perform a pathloss-based open loop intra-cell TPC procedure to set the transmit power for an initial UL transmission phase.

EXE24. The WTRU of EXE 17 wherein the UL CQI is UL grant information.

EXE 25. The WTRU of EXE 17 wherein the processor is configured to calculate the WTRU transmit power as follows:

$$P_{tx} = \max\big(\min\big(SINR_T + PL + IN_0 + K + \alpha \cdot f\big(CQI, SINR_T\big), P_{\max}\big),\ P_{\min}\big),$$

where $SINR_T$ is the target signal-to-interference noise ratio (SINR) in dB at the serving eNodeB, $PL$ is the pathloss in dB, including shadowing, from the serving eNodeB to the WTRU based on the DL reference signal, $IN_0$ is UL interference and noise power in dBm at the serving eNodeB, $K$ is a power control margin used for the serving eNodeB, $f(CQI, SINR_T)$ is a closed loop correction factor based on the UL CQI and the corresponding target SINR, $\alpha$ is a weighting factor, and $P_{max}$ and $P_{min}$ are the maximum and minimum transmit power levels in dBm, respectively, for transmissions made by the WTRU over the at least one UL channel.

EXE 26. The WTRU of EXE 25 wherein $0 \le \alpha < 1$.

EXE 27. The WTRU of EXE 25 wherein the closed loop correction factor, $f(CQI, SINR_T)$, is used to compensate for open loop TPC related errors.

EXE 28. The WTRU of EXE 25 wherein the closed loop correction factor $f(CQI, SINR_T)$ is calculated by the WTRU according to UL CQI feedback from the serving eNodeB, taking into account the fact that the UL CQI represents the SINR received at the eNodeB, such that $f(CQI, SINT_T) = SINR_T - E\{SINR_{est}(CQI)\}$ (dB), where $SINR_{est}(CQI)$ represents the eNodeB received SINR estimate which the WTRU derives from the UL CQI feedback.

EXE 29. The WTRU of EXE 28 wherein $E\{SINR_{est}(CQI)\}$ denotes the estimated SINR average over time such that:

$$E\big\{SINR_{est}\big(CQI^k\big)\big\} = \rho \cdot E\big\{SINR_{est}\big(CQI^{k-1}\big)\big\} + \big(1 - \rho\big) \cdot E\big\{SINR_{est}\big(CQI^k\big)\big\},$$

where $CQI^k$ represents the k-th received CQI and $\rho$ is an averaging filter coefficient, where $0 \le \rho \le 1$.

EXE 30. An evolved Node-B (eNodeB) for performing transmit power control (TPC), the eNodeB comprising:

(a) a processor configured to measure an uplink (UL) interference level, and determine whether or not the measured UL interference level exceeds a predefined threshold; and

(b) a transmitter electrically coupled to the processor, the transmitter being configured to broadcast an interference load indicator on a regular basis or a trigger basis, wherein the interference load indicator indicates whether or not the measured UL interference level exceeds the predefined threshold.

EXE 31. The eNodeB of EXE 30 wherein the measured UL interference level is a UL interference over thermal noise (*IoT*) measurement.

EXE 32. The eNodeB of EXE 30 wherein the transmitter is configured to signal a target signal-to-interference noise ratio (SINR) level, $SINR_T$, to a wireless transmit/receive unit (WTRU) as a function of at least one of the distance from the eNodeB to the WTRU and a given quality requirement.

EXE 33. The eNodeB of EXE 32 wherein the given quality requirement is block error rate (BLER).

EXE 34. The eNodeB of EXE 30 further comprising:
(c) a mapping table electrically coupled to the processor, wherein the processor is configured to use the mapping table to map a target quality value to a target SINR value.

EXE 35. The eNodeB of EXE 34 wherein the target quality value is block error rate (BLER).

EXE 36. The eNodeB of EXE 30 wherein the transmitter is configured to generate a downlink (DL) reference signal.

EXE 37. The eNodeB of EXE 30 wherein the transmitter is configured to signal a power control margin, *K.*

EXE 38. The eNodeB of EXE 37 wherein the power control margin, *K*, is embedded in the target SINR, $SINR_T$, such that $SINR_T$ (*after embedding*) $= SINR_T + K$ in *dB.*

EXE 39. The eNodeB of EXE 30 wherein the processor is configured to measure or estimate a total UL interference and noise level, $IN_0$, which is averaged by the processor across all of the sub-carriers in use, or a subset of the sub-carriers, and the transmitter is configured to signal the $IN_0$.

EXE 40. The eNodeB of EXE 30 wherein the transmitter is configured signal the maximum and minimum UL transmit power level, $P_{max}$ and $P_{min}$.

EXE 41. The eNodeB of EXE 30 wherein the transmitter is configured to signal UL channel quality information (CQI).

EXE 42. The eNodeB of EXE 41 wherein the UL CQI includes a UL grant information or modulation and coding set (MCS) information, which is signaled originally for the purpose of UL link adaptation.

EXE 43. The eNodeB of EXE 30 wherein the transmitter is configured to signal
a channel quality information (CQI) mapping rule used for CQI feedback generation.

EXE 44. A method of performing transmit power control (TPC) of a wireless transmit/receive unit (WTRU), the method comprising:

(a) the WTRU performing an open loop intra-cell TPC procedure by determining a set point parameter; and

(b) the WTRU performing a closed loop intra-cell TPC procedure to adjust the set point parameter determined by the open loop intra-cell TPC procedure by using a closed loop correction factor.

EXE 45. The method of EXE 44 wherein the set point parameter is uplink (UL) pathloss from the WTRU to a serving evolved Node-B (eNodeB) residing in a serving cell, and the closed loop correction factor is used to compensate for open loop TPC related errors associated with the set point parameter.

EXE 46. The method of EXE 45 wherein the closed loop correction factor is a function of UL channel quality information (CQI) and a target signal-to-interference noise ratio (SINR).

EXE 47. The method of EXE 44 wherein the set point parameter is a target signal-to-interference noise ratio (SINR) at a serving evolved Node-B (eNodeB) residing in a serving cell, and the closed loop correction factor is used to compensate for open loop TPC related errors associated with the set point parameter.

EXE 48. The method of EXE 44 wherein the set point parameter is the UL interference and noise power ($IN_0$) at a serving evolved Node-B (eNodeB) residing in a serving cell, and the closed loop correction factor is used to compensate for open loop TPC related errors associated with the set point parameter.

EXE 49. The method of EXE 44 wherein the set point parameter is a power control margin (K) at a serving evolved Node-B (eNodeB) residing in a serving cell, and the closed loop correction factor is used to compensate for open loop TPC related errors associated with the set point parameter.

EXE 50. A wireless transmit/receive unit (WTRU) for performing transmit power control (TPC), the WTRU comprising:

    (a) a receiver;

    (b) a transmitter; and

    (c) a processor electrically coupled to the receiver and the transmitter, the processor being configured to perform an open loop intra-cell TPC procedure by determining a set point parameter, and perform a closed loop intra-cell TPC procedure to adjust the set point parameter determined by the open loop intra-cell TPC procedure by using a closed loop correction factor.

EXE 51. The WTRU of EXE 50 wherein the set point parameter is uplink (UL) pathloss from the WTRU to a serving evolved Node-B (eNodeB) residing in a serving cell, and the closed loop correction factor is used to compensate for open loop TPC related errors associated with the set point parameter.

EXE 52. The WTRU of EXE 50 wherein the closed loop correction factor is a function of uplink (UL) channel quality information (CQI) and a target signal-to-interference noise ratio (SINR).

EXE 53. The WTRU of EXE 50 wherein the set point parameter is a target signal-to-interference noise ratio (SINR) at a serving evolved Node-B (eNodeB) residing in a serving cell, and the closed loop correction factor is used to compensate for open loop TPC related errors associated with the set point parameter.

EXE 54. The WTRU of EXE 50 wherein the set point parameter is the UL interference and noise power ($IN_0$) at a serving evolved Node-B (eNodeB) residing in a serving cell, and the closed loop correction factor is used to compensate for open loop TPC related errors associated with the set point parameter.

EXE 55. The WTRU of EXE 50 wherein the set point parameter is a power control margin ($K$) at a serving evolved Node-B (eNodeB) residing in a serving cell, and the closed loop correction factor is used to compensate for open loop TPC related errors associated with the set point parameter.

**Claims**

1. A wireless transmit/receive unit (WTRU) comprising:

    a processor configured to:

        determine a reference signal to be used for determining a pathloss;
        receive a power offset, wherein the power offset indicates a power level difference between a transmit power used for transmitting the reference signal and a power level indicated in a broadcast channel (BCH) transmission;

determine a transmit power of the reference signal based on the power offset;
determine the pathloss based on a measurement of the reference signal;
determine a power level for an uplink transmission based on the determined pathloss; and
transmit the uplink transmission at the determined power level.

2. The WTRU of claim 1, wherein the transmit power level for the uplink transmission is determined further based on a predetermined weighting factor, and the predetermined weighting factor has a value from 0 to 1.

3. The WTRU of claim 1, wherein the processor is further configured to determine the power level for the uplink transmission using a combined open loop and closed loop power control scheme, wherein an open loop power control component of the combined open loop and closed loop power control scheme comprises the determined pathloss, and wherein a closed loop power control component of the combined open loop and closed loop power control scheme is based on at least transmit power control (TPC) information received from a network.

4. The WTRU of claim 3, wherein the processor is further configured to:

set an initial transmit power level for the uplink transmission using the open loop power control component of the combined open loop and closed loop power control scheme; and
adjust the initial transmit power level to the determined power level using the closed loop power control component of the combined open loop and closed loop power control scheme.

5. The WTRU of claim 4, wherein the open loop power control component of the combined open loop and closed loop power control scheme further comprises a target signal-to-interference and noise ratio (SINR).

6. The WTRU of claim 4, wherein the processor is further configured to receive feedback information from the network and determine the power level for the uplink transmission further based on the feedback information, the feedback information comprising modulation and coding set (MCS) information.

7. The WTRU of claim 6, wherein the feedback information and the TPC information are received in one or more downlink control messages.

8. The WTRU of claim 1, wherein the power level for the uplink transmission is determined further based on a maximum transmit power level.

9. The WTRU of claim 1, wherein the processor being configured to determine the transmit power of the reference signal based on the power offset comprises the processor being configured to derive the transmit power of the reference signal by applying the power offset to the power level indicated in the BCH transmission.

10. The WTRU of claim 9, wherein the pathloss is determined based on the derived transmit power of the reference signal.

11. A method implemented in a wireless transmit/receive unit (WTRU), the method comprising:

determining a reference signal to be used for determining a pathloss;
receiving a power offset, wherein the power offset indicates a power level difference between a transmit power used for transmitting the reference signal and a power level indicated in a broadcast channel (BCH) transmission;
determining a transmit power of the reference signal based on the power offset;
determining the pathloss based on a measurement of the reference signal;
determining a power level for an uplink transmission based on the determined pathloss; and
transmitting the uplink transmission at the determined power level.

12. The method of claim 11, wherein the transmit power level for the uplink transmission is determined further based on a predetermined weighting factor, and the predetermined weighting factor has a value from 0 to 1.

13. The method of claim 11, wherein the power level for the uplink transmission is determined using a combined open loop and closed loop power control scheme, wherein an open loop power control component of the combined open loop and closed loop power control scheme comprises the determined pathloss, and wherein a closed loop power control component for the combined open loop and closed loop power control scheme is based on at least transmit power control (TPC) information received from a network.

**14.** The method of claim 13, wherein the power level for the uplink transmission is determined by:

setting an initial transmit power level for the uplink transmission using the open loop power control component of the combined open loop and closed loop power control scheme; and

adjusting the initial transmit power level to the determined power level using the closed loop power control component of the combined open loop and closed loop power control scheme.

**15.** The method of claim 14, further comprising receiving feedback information from the network and determining the power level for the uplink transmission further based on the feedback information, the feedback information comprising modulation and coding set (MCS) information.

FIG. 1

200

START

AN INITIAL UPLINK (UL) TRANSMISSION PHASE FOR A
WIRELESS TRANSMIT/RECEIVE UNIT (WTRU) IS IMPLEMENTED. — 205

THE WTRU PERFORMS A PATHLOSS-BASED OPEN LOOP
INTRA-CELL TRANSMIT POWER CONTROL (TPC) PROCEDURE
TO SET THE TRANSMIT POWER FOR THE INITIAL UL
TRANSMISSION PHASE (E.G., SIMILAR TO RANDOM ACCESS
CHANNEL (RACH) PROCESSING), BASED ON SYSTEM
PARAMETERS PROVIDED BY A SERVING eNodeB. — 210

A NORMAL UL TRANSMISSION PHASE FOR THE WTRU IS
IMPLEMENTED. — 215

THE WTRU PERFORMS A PATHLOSS-BASED OPEN LOOP INTRA-
CELL TPC PROCEDURE BASED ON SYSTEM PARAMETERS
PROVIDED BY THE SERVING eNodeB, AND PERFORMS A
CLOSED LOOP (CHANNEL QUALITY INFORMATION (CQI)-BASED)
INTRA-CELL TPC PROCEDURE BASED ON UL CQI (UL GRANT
INFORMATION) PROVIDED BY THE SERVING eNodeB. — 220

THE WTRU OPTIONALLY PERFORMS A UL INTERFERENCE
OVER THERMAL NOISE *(IoT)*-BASED INTER-CELL TPC
PROCEDURE BASED ON LOAD INDICATORS *(IoT)*
RECEIVED FROM ALL NEIGHBORING CELLS (eNodeBs). — 225

THE WTRU SETS THE TRANSMIT POWER OF AT LEAST
ONE UL CHANNEL (E.G., UL SHARED DATA CHANNEL, UL
CONTROL CHANNEL) BASED ON VALUES GENERATED BY
PERFORMING STEP 220, (AND OPTIONALLY STEP 225). — 230

END

*FIG. 2*

**EUROPEAN SEARCH REPORT**

Application Number

EP 19 21 0829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/046789 A1 (HUH HOON [KR] ET AL) 2 March 2006 (2006-03-02) * paragraph [0078] - paragraph [0097]; figures 5-6 * | 1-15 | INV.<br>H04W52/06<br>H04W52/22<br>H04W52/24<br>H04W52/08<br>H04W52/10<br>H04W52/14<br>H04W52/26<br>H04W52/28 |
| A | WO 2004/054135 A1 (INTERDIGITAL TECH CORP [US]) 24 June 2004 (2004-06-24) * paragraph [0029] - paragraph [0041]; figure 2 * | 1-15 | |
| A | US 6 600 772 B1 (ZEIRA ARIELA [US] ET AL) 29 July 2003 (2003-07-29) * figures 3, 4 * * column 3, line 23 - column 7, line 22 * * column 1, line 51 - column 2, line 41 * | 1-15 | |
| A | US 2006/035660 A1 (ANDERSON NICHOLAS W [GB]) 16 February 2006 (2006-02-16) * paragraph [0031] - paragraph [0068]; figure 4 * | 1-15 | TECHNICAL FIELDS SEARCHED (IPC) |
| A | EP 1 653 634 A2 (SAMSUNG ELECTRONICS CO LTD [KR]) 3 May 2006 (2006-05-03) * paragraph [0038] - paragraph [0053]; figure 3 * | 1-15 | H04B<br>H04W |

The present search report has been drawn up for all claims

| Place of search | Date of completion of the search | Examiner |
|---|---|---|
| Munich | 6 May 2020 | Cabañas Prieto, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 694 262 A1

### ANNEX TO THE EUROPEAN SEARCH REPORT
### ON EUROPEAN PATENT APPLICATION NO.

EP 19 21 0829

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2020

| Patent document cited in search report | | Publication date | Patent family member(s) | | Publication date |
|---|---|---|---|---|---|
| US 2006046789 | A1 | 02-03-2006 | KR 20060016042 | A | 21-02-2006 |
| | | | US 2006046789 | A1 | 02-03-2006 |
| WO 2004054135 | A1 | 24-06-2004 | AR 042364 | A1 | 15-06-2005 |
| | | | AT 437484 | T | 15-08-2009 |
| | | | AU 2003299605 | A1 | 30-06-2004 |
| | | | BR 0316762 | A | 25-10-2005 |
| | | | CA 2509640 | A1 | 24-06-2004 |
| | | | CN 1726662 | A | 25-01-2006 |
| | | | CN 103327522 | A | 25-09-2013 |
| | | | EP 1579602 | A1 | 28-09-2005 |
| | | | EP 2099246 | A1 | 09-09-2009 |
| | | | JP 4546254 | B2 | 15-09-2010 |
| | | | JP 2006510260 | A | 23-03-2006 |
| | | | KR 20050091000 | A | 14-09-2005 |
| | | | KR 20050099645 | A | 14-10-2005 |
| | | | KR 20100110395 | A | 12-10-2010 |
| | | | MX PA05006218 | A | 19-08-2005 |
| | | | TW I249296 | B | 11-02-2006 |
| | | | TW I333343 | B | 11-11-2010 |
| | | | TW I343725 | B | 11-06-2011 |
| | | | US 2004170132 | A1 | 02-09-2004 |
| | | | WO 2004054135 | A1 | 24-06-2004 |
| US 6600772 | B1 | 29-07-2003 | US 6600772 | B1 | 29-07-2003 |
| | | | US 2003198279 | A1 | 23-10-2003 |
| | | | US 2004196890 | A1 | 07-10-2004 |
| | | | US 2005213636 | A1 | 29-09-2005 |
| US 2006035660 | A1 | 16-02-2006 | AT 535061 | T | 15-12-2011 |
| | | | AT 545305 | T | 15-02-2012 |
| | | | CN 101002402 | A | 18-07-2007 |
| | | | CN 102547945 | A | 04-07-2012 |
| | | | CN 102685863 | A | 19-09-2012 |
| | | | CN 103747514 | A | 23-04-2014 |
| | | | CN 103813429 | A | 21-05-2014 |
| | | | EP 1779545 | A1 | 02-05-2007 |
| | | | EP 2271155 | A1 | 05-01-2011 |
| | | | ES 2379272 | T3 | 24-04-2012 |
| | | | ES 2380909 | T3 | 21-05-2012 |
| | | | JP 5319115 | B2 | 16-10-2013 |
| | | | JP 2009505446 | A | 05-02-2009 |
| | | | KR 20070051311 | A | 17-05-2007 |
| | | | KR 20120038001 | A | 20-04-2012 |
| | | | KR 20120038002 | A | 20-04-2012 |
| | | | KR 20120043010 | A | 03-05-2012 |

EPO FORM P0459

For more details about this annex : see Official Journal of the European Patent Office, No. 12/82

**EP 3 694 262 A1**

**ANNEX TO THE EUROPEAN SEARCH REPORT
ON EUROPEAN PATENT APPLICATION NO.**

EP 19 21 0829

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2020

| Patent document cited in search report | Publication date | Patent family member(s) | Publication date |
|---|---|---|---|
| | | KR 20120104426 A | 20-09-2012 |
| | | PL 1779545 T3 | 29-06-2012 |
| | | PL 2271155 T3 | 31-07-2012 |
| | | US 2006035660 A1 | 16-02-2006 |
| | | US 2013114541 A1 | 09-05-2013 |
| | | US 2013114569 A1 | 09-05-2013 |
| | | US 2015264653 A1 | 17-09-2015 |
| | | US 2016345273 A1 | 24-11-2016 |
| | | US 2018070318 A1 | 08-03-2018 |
| | | US 2020107271 A1 | 02-04-2020 |
| | | WO 2006015983 A1 | 16-02-2006 |
| EP 1653634 A2 | 03-05-2006 | CN 101048961 A | 03-10-2007 |
| | | EP 1653634 A2 | 03-05-2006 |
| | | JP 4402721 B2 | 20-01-2010 |
| | | JP 2008514156 A | 01-05-2008 |
| | | KR 20060038300 A | 03-05-2006 |
| | | US 2006092875 A1 | 04-05-2006 |
| | | WO 2006046839 A1 | 04-05-2006 |

EPO FORM P0459

For more details about this annex : see Official Journal of the European Patent Office, No. 12/82

page 2 of 2

23